# EUROPEAN PATENT SPECIFICATION

(11) **EP 4 562 281 B1**
(45) Date of publication and mention of the grant of the patent: **29.04.2026**
(21) Application number: 23735086.3
(22) Date of filing: 08.06.2023
(51) Int. Cl.: F01L 13/00, F02D 13/00, F02D 41/00, F02D 13/02, F01L 9/14, F02D 41/40, F02B 31/00, F02B 31/08

(54) **SPARK-IGNITION INTERNAL COMBUSTION ENGINE, AND METHOD FOR CONTROLLING THE SAME**
FREMDGEZÜNDETE BRENNKRAFTMASCHINE UND VERFAHREN ZU IHRER STEUERUNG
MOTEUR À COMBUSTION INTERNE À ÉTINCELLE ET SON PROCÉDÉ DE COMMANDE

(30) Priority: 29.07.2022 IT 202200016170
(43) Date of publication of application: 04.06.2025
(73) Proprietor: C.R.F. Società Consortile per Azioni, 10043 Orbassano (Torino) (IT)
(72) Inventor: RICCO, Raffaele, 10043 Orbassano (Torino) (IT); GARGANO, Marcello, 10043 Orbassano (Torino) (IT); STUCCHI, Sergio, 10043 Orbassano (Torino) (IT); LEPORE, Domenico, 10043 Orbassano (Torino) (IT); ALTAMURA, Chiara, 10043 Orbassano (Torino) (IT)
(74) Representative: Buzzi, Notaro & Antonielli d'Oulx S.p.A.
(86) International application number: PCT/IB2023/055914
(87) International publication number: WO 2024/023601

(56) References cited:
- DE-A1- 102019 113 738
- US-A1- 2004 250 780
- US-A1- 2016 131 058
- US-A1- 2019 093 571
- US-B1- 6 530 361
- US-B2- 6 705 261

## Description

### Field of the invention

This invention relates to spark-ignition internal combustion engines, of the type comprising one or more cylinders and respective pistons sliding within the cylinders between a Top Dead Center (TDC) and a Bottom Dead Center (BDC) and operatively connected to a crankshaft, said engine being configured to perform successive intake, compression, expansion and exhaust stages during each operating cycle in each cylinder,
wherein the engine comprises, for each cylinder:
- a first intake duct and a second intake duct leading into the cylinder and configured to receive air at the same pressure,
- a first intake valve and a second intake valve associated with the cylinder, to control the entry of a flow of intake air into the cylinder from the first intake duct and the second intake duct, respectively, during each operating cycle of the cylinder,
- an actuating device for actuating said first intake valve and said second intake valve,
- a fuel supply system comprising at least one injector associated with each cylinder, and configured and arranged to supply fuel, directly or indirectly, into a combustion chamber defined within the respective cylinder, during each operating cycle of the cylinder, and
- a spark plug associated with each cylinder.

### Prior art

The Applicant has already proposed in its European patent application EP 21157310 dated 02.16.2021 (still secret at the filing date of this application) an engine of the type indicated above in which during the intake stage in each operating cycle of the cylinder, first an opening and closing movement of only a first intake valve, while the second intake valve remains closed, and then an opening and closing movement of only the second intake valve is actuated, while the first intake valve remains closed. **In** this way, the two air flows entering the cylinder, especially the flow through the second opening, thanks to a higher instantaneous flow rate, give rise to the generation of a greater turbulent kinetic energy (TKE) regarding to, in favour of the combustion efficiency and reduction of harmful exhaust emissions.

Although this solution has proved to be very advantageous, there is still room for further improvements, aimed at further increasing combustion efficiency.

Studies and experiments of the Applicant have in fact shown that in the above solution the direct fuel injection into the combustion chamber can lead to a non-homogeneity of the air-fuel mixture, due to the fact that during the injection an intake valve is in open condition, while the other intake valve is in the closed condition. If the injector is in a central position with respect to the combustion chamber, the fuel jet can remain confined within the central part of the combustion chamber, being surrounded by the swirl vortex generated by the flow coming from only one of the two intake ducts, which creates a not homogeneous field of the mixture in the combustion chamber. If the injector is positioned laterally to the combustion chamber, the symmetrical fuel jet leaving the injector interferes on one side with an inlet valve in the open condition and on the other side with an inlet valve in the closed condition, which creates a not homogeneous field of the mixture in the combustion chamber. In general, there may also be an even more disadvantageous condition in which the injector spray impacts right on the open valve due to these asymmetries of the flow field with respect to the spray itself.

Another problem observed is the worsening effect of the cylinder charge: in fact, during the initial stage of the piston descent, the opening of only one of the two valves induces a swirl flow field, whereby the incoming air heats up twice:
1. crossing a reduced passage section (that one of the only open valve), therefore with a worsening of the outflow coefficient (compared to the case in which two valves are open), said coefficient has a dissipative value and therefore the final effect is to heat the incoming air as well as reducing the air that can potentially be intaken;
2. the swirl thus generated, although it could potentially cool the hot spots of the combustion chamber, with anti-knocking value, on the other hand heats the incoming air due to contact with the walls, and therefore the density and the mass of the air that can potentially be intaken, with reduction of the maximum load obtainable from the engine

There is therefore the double disadvantage of reducing the mass of air and fuel that can potentially be intaken, and heating said mass: even this could give rise to the onset of knocking, this time not induced by the hot spots in the combustion chamber, but by the mass of air /fuel itself, because the temperature at the end of compression would be higher than in the standard embodiment.

An engine according to the preamble of claim 1 and a method according to the preamble of claim 7 are known from US 2019/093571 A1. Further solutions are known from US 2004/250780 A1, US 6 530 361 B1, US 6 705 261 B2, US 2016/131058 A1 and DE 10 2019 113738 A1.

### Object of the invention

The main object of this invention is to provide a spark-ignition internal combustion engine which is characterized by high combustion efficiency and reduced harmful exhaust emissions in all operating conditions of the engine.

A further object of the invention is to achieve the aforementioned objectives with relatively simple and low-cost means.

### Summary of the invention

In view of achieving the aforementioned objects, the invention relates to a spark-ignition internal combustion engine having the features of claim 1 and a method having the features of claim 7.

Thanks to the aforementioned features, the following effects are obtained:
- in said first opening period of the two intake valves, the two air flows introduced into the cylinder via the two intake ducts give rise to a motion characterized only by the tumble component and maximum filling of the cylinder,
- in said second opening period, the flow introduced into the cylinder via a single intake duct gives rise to a swirl movement.

Therefore, in the engine according to the invention the fuel injection is performed during the first opening period of the intake valves, when both intake valves are open, whereby the problems of asymmetry of the flow field in chamber during the fuel injection stage are overcome, which can occur in the previously proposed solution which was discussed above: in this way, the fuel injection, particularly under high load conditions, when it needs to start when the piston is in the middle of the intake stroke, would take place in a flow field characterized by a plane of symmetry with respect to the injector axis.

Furthermore, the simultaneous opening of the valves, during the first half of the intake stroke of the piston, i.e. from TDC to the position in which the piston is at half stroke, favors the formation of kinetic energy rather than turbulent kinetic energy: said kinetic energy is trapped only in the tumble motions to then be released only later, in a more advantageous way for the purposes of a higher combustion rate. It should be remembered that the dissipation of the turbulent kinetic energy is proportional to the cube of the value of the turbulent energy itself! For this reason it is more convenient to generate turbulent kinetic energy as late as possible, so as to preserve a sufficient quantity at the ignition time: that is why it is better to generate it only with the opening of a single valve at the BDC, rather than already from the first moments of the intake stroke.

In this way the air mass that can be intaken would also be maximized during this first opening without excessively increasing the temperature of the trapped air.

In the engine according to the invention, during said first opening period of the two intake valves, the swirl vortex in the combustion chamber is substantially zero, therefore no significant heat exchanges take place between the intake air and the walls of the combustion chamber, while a swirl vortex is obtained only during the second opening period, in which only the first intake valve is opened. This swirl vortex can be modulated via the variable actuation system which allows to change the opening crank angle, the closing crank angle and the lift of the intake valve. The swirl vortex allows to cool the hot spots of the combustion chamber, which allows to obtain an anti-knocking effect even in the presence of a high compression ratio: therefore the anti-knocking effect would not be lost, but rather it is optimized, together with the air and fuel charge that can be intaken and the symmetry of the injector sprays.

In one example, the fuel supply system is configured to perform a further fuel injection after the start of said second opening period.

In a preferred embodiment, the actuation device for actuating the intake valves is an electronically controlled hydraulic actuation device (for example the device developed by the Applicant and marketed under the trademark "Multi-Air") or a device with electromagnetic or electropneumatic actuators. In each case, the actuation device for actuating the intake valves is configured to change the crank angle at which each intake valve is opened and/or the crank angle at which each intake valve is closed and/or the lift at which each intake valve is opened, depending on engine load and engine speed.

In this way, it is in particular possible to regulate, depending on engine load and engine speed, the stage and the lift of said first intake valve during said second opening period, which allows to change the intensity of the swirl motion imparted to the charge of air introduced into the cylinder in the second opening period, again depending on engine load and engine speed.

The invention also relates to the engine control method described above

### Detailed description of the invention

Further features and advantages of the invention will become apparent from the following description with reference to the attached drawings, provided purely by way of non-limiting example, in which:
- figure 1 is a schematic perspective view of the combustion chamber of a cylinder of the internal combustion engine according to the invention,
- figure 2 is a schematic sectional view of the combustion chamber of the cylinder of the engine according to the invention, in one example with the injector arranged centrally in the combustion chamber,
- figure 3 shows a diagram of a variable actuation system of the intake valves of the known type developed by the Applicant and marketed under the trademark "Multi-Air", which can be used in the engine according to the invention,
- figure 4 shows the diagrams of the lift of the two intake valves associated with each cylinder of the engine according to the invention,
- figure 5 is a diagram showing the change of the mass of air introduced into the cylinder as a function of the crank angle, in comparison with a conventional solution,
- figure 6 is another diagram showing the change of the airflow rate (expressed in Kg/s) as a function of the crank angle, in comparison with a conventional solution,
- figures 7, 8, 9 are diagrams showing the change of the tumble index, swirl index and cross-tumble index as a function of the crank angle which is recorded in an embodiment of the engine according to the invention, in comparison with a conventional solution,
- figure 10 is a further diagram showing the change of the Turbulent Kinetic Energy (TKE) as a function of the crank angle, in the case of an embodiment of the engine according to the invention, in comparison with a conventional solution, and
- figure 11 is a diagram showing an alternative fuel injection strategy in the engine according to the invention.

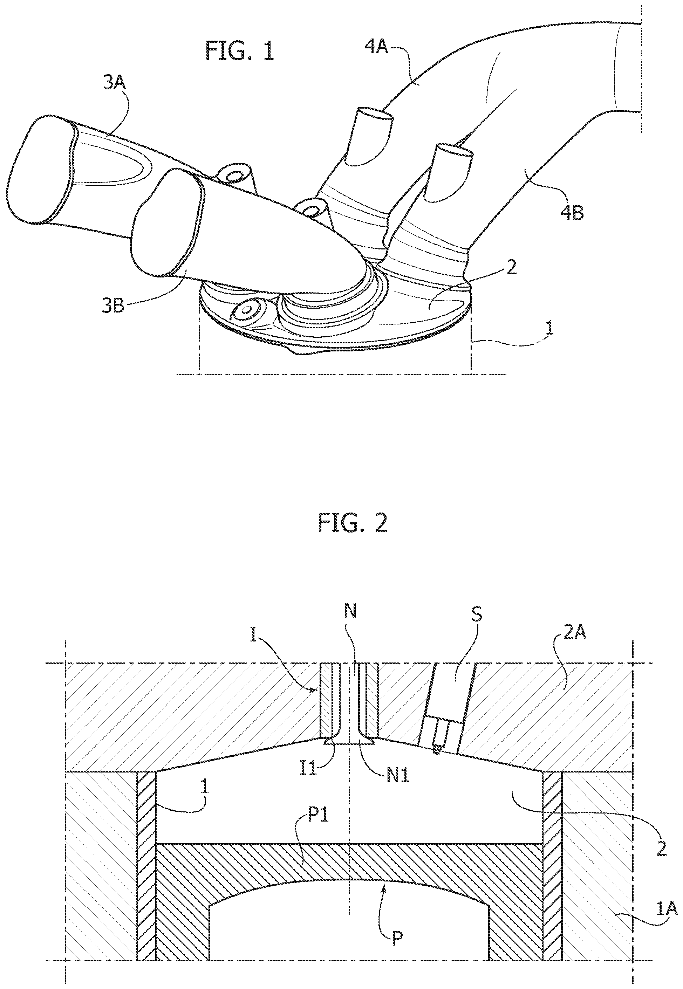

In figure 1, the reference 1 indicates a cylinder of a spark-ignition internal combustion engine, according to the invention, defined in a manner known per se within an engine block, to which a combustion chamber 2 is associated, defined in a cylinder head of the engine. Two intake ducts 3A, 3B lead into the combustion chamber 2 and are shaped and arranged according to any known technique, so as to introduce respective air flows into the cylinder 1, generating, when the two intake valves are opened simultaneously and identically, a flow field characterized only by tumble components, said ducts being configured to maximize the filling of the cylinder without producing turbulence. The two intake ducts 3A, 3B communicate with a common intake manifold (not shown) in such a way as to both receive air at the same pressure. The two ducts 3A, 3B are reconfigured and arranged in such a way that the two air flows introduced by them into the cylinder tend to have components suitable for favoring the filling of the cylinder, rather than the generation of turbulence. Specifically, said ducts are such as to generate, when the valves open with substantially identical laws of motion, a flow field characterized only by tumble.

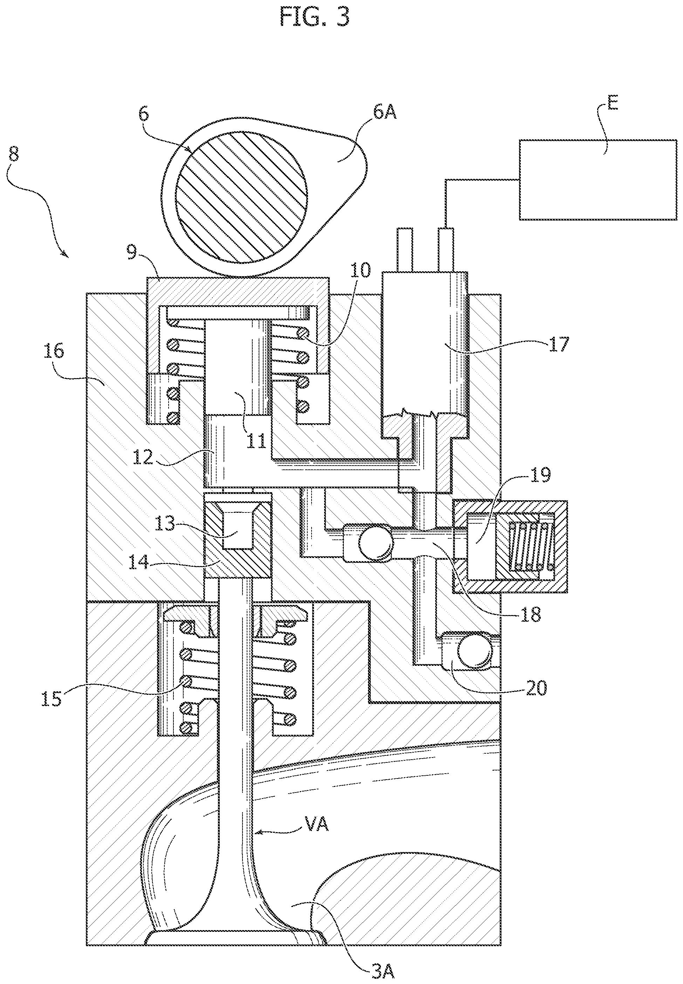

According to the conventional technique, the two intake ducts 3A, 3B are associated with two respective intake valves VA and VB, one of which can be seen for example in figure 3. The valves VA and VB are of the conventional poppet type, with stem and circular head.

Also associated with each cylinder 1 are two exhaust ducts 4A, 4B (figure 1) communicating with an exhaust manifold.

Figure 2 shows the engine block 1A within which the cylinder 1 is defined, and the piston P (schematically showed) slidably mounted within the cylinder 1 and having a piston head P1 facing the combustion chamber 2. The reference 2A indicates the cylinder head, defining the combustion chamber 2.

The fuel supply system is a supply system of any known type, comprising, for each cylinder, a fuel injector I. Figure 2 shows only the nozzle end part of the injector I.

In the example illustrated, the injector I is arranged in the center of the combustion chamber 2. A spark plug S of any known type is also mounted in the cylinder head 2A so as to have its electrodes, also substantially in the center of the combustion chamber 2, adjacent to the nozzle of the injector I. However, the invention is applicable with any arrangement of the injector in the combustion chamber and with any arrangement of the spark plug. Furthermore, the engine according to the invention can also provide for an indirect fuel injection, with the injector located for example in the intake duct 3A, to which the intake valve VA is associated.

Again with reference to the specific example in figure 2, the injector I is preferably of the type comprising an injector needle N, having an enlarged cone-shaped terminal head N1, arranged outside the outlet I1 of the nozzle of the injector I. According to the conventional technique, the injector I has an electromagnetic actuator which is capable of imparting an outwardly movement to the injector needle N, which causes the cone-shaped head N1 to move away from the outlet I1 of the injector nozzle, to allow the fuel injection into the combustion chamber 2. A particular type of injector I which is suitable for the application illustrated here has been developed by the Applicant and has been the subject of the Italian patent applications IT 10 2022 0000 13627 and IT 10 2022 0000 13636, both filed on 06.28.2022. This injector has an injector needle actuated by an electromagnetically controlled hydraulic servo-valve.

In a preferred exemplary embodiment, the invention is applied to an internal combustion engine equipped with a variable actuation system of the engine intake valves of the type developed by the same Applicant and marketed under the trademark Multi-Air.

Figure 3 shows schematically an example of the Multi-Air variable actuation system. In this case, each of the intake valves VA, VB (figure 3 shows the device associated with the valve VA) is actuated by a respective cam 6A of a camshaft 6 of the engine by means of an electronically controlled hydraulic device 8. The cam 6 actuates a tappet 9 kept in contact with the cam 6 by a return spring 10. The tappet 9 is associated with the piston 11 of a master cylinder which transfers pressurized fluid from a chamber 12 to the chamber of a slave cylinder 13 whose piston 14 serves as an actuator of the intake valve VA. The intake valve VA is recalled by a spring 15 towards a closed position of the intake duct 3A. All of the above components are carried by the engine cylinder head structure 16. An electronically controlled valve 17 is controlled by an electronic control unit E. When the electronically controlled valve is in a closed condition, it interrupts the communication between the pressurized fluid chamber 12 and a low pressure space 18, communicating with a fluid accumulator 19 and with an inlet 20 intended to be in communication with the engine lubrication circuit. If the electronically controlled valve 17 is in the closed condition, the pressurized fluid chamber 12 is isolated, whereby the movements of the tappet 9 imparted by the cam 6 can be transferred, via the fluid in the chamber 12 and the slave cylinder 13, to the intake valve VA. In a condition in which the cam 6 is keeping the intake valve VA open, an opening of the electronically controlled valve 17 actuated by the electronic control unit L causes the discharge of the pressurized fluid chamber 12 and the consequent closure of the valve intake VA due to the effect of the return spring 15. In this condition, the intake valve VA is insensitive to the movements of the tappet 9 imparted by the cam 6.

This description is provided here purely as an indication of the basic operating principle of the Multi-Air system. The Applicant has developed various embodiments of this system which have been the subject of various patent publications.

However, it is understood that the invention can also be used in combination with variable actuation systems for actuating the intake valves of different types, for example electromagnetic or electropneumatic actuation systems.

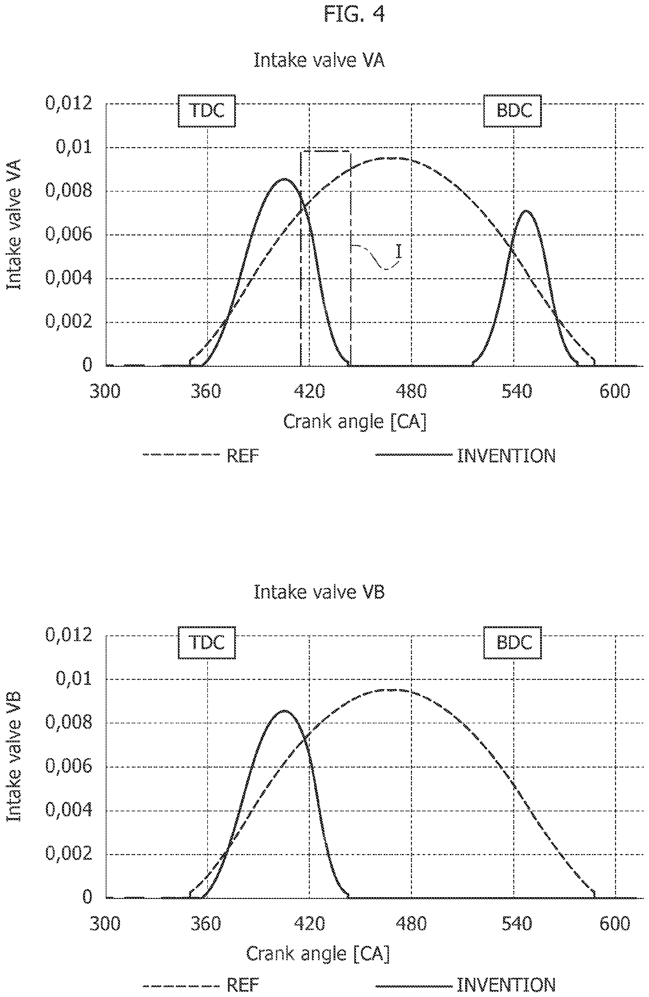

Thanks to the arrangement, for each of the two intake valves VA, VB of each cylinder, of a variable actuation system, for example of the Multi-Air type, it is possible to implement the strategy for opening the intake valves which is one of the fundamental elements of this invention. This strategy is shown in figure 4 of the accompanying drawings, with reference to an example. The upper diagram of figure 4 shows the lift profiles of the first intake valve VA, while the lower diagram of figure 4 shows the lift profile of the second intake valve VB.

In both diagrams, the bell-shaped dashed line shows the lift profile of each intake valve which is achieved in a conventional solution, with mechanical actuation of the intake valves. Said bell-shaped profile substantially corresponds to the lift profile determined by the cam 6 (figure 3) cooperating with the tappet 9.

In the above diagrams, the abscissa axis shows the crank angle values. According to the convention adopted, when the piston of a given cylinder is at TDC, at the beginning of the conventional intake stage of the operating cycle in the cylinder, the crank angle is equal to 360°. With reference again to the conventional solution, at the end of the intake stage, when the piston has reached the BDC, the crank angle is equal to 540°.

According to the invention, the variable actuation device of the two intake valves VA and VB is configured in such a way that it achieves a first opening period, which in the example shown in figure 4 starts at a crank angle substantially equal to 360° and ends at a crank angle around 440°, where both inlet valves VA and VB are first opened and then closed. As can be seen, the lift diagram of each intake valve is very steep and would in practice be unattainable with a conventional system of the mechanical type, in which the lift profile is determined by the cam profile.

With reference again to the engine according to the invention, as can therefore be seen, a first opening period is achieved in which both intake valves are substantially opened when the piston of the respective cylinder is at TDC, at the beginning of the intake stage, and are closed when the piston is at an intermediate point in the descent from the TDC to the BDC.

Still according to the invention, a second opening period is achieved, in which only the first intake valve VA is first opened and then closed again, while the second intake valve VB remains closed. As can be seen in figure 4, in the case of the illustrated example, the second opening period, in which only the intake valve VA is opened, starts in proximity of the BDC (in the example around 520°) and ends when the piston is already ascending from BDC to TDC, i.e. in the subsequent compression stage (in the example at an angle around 580°).

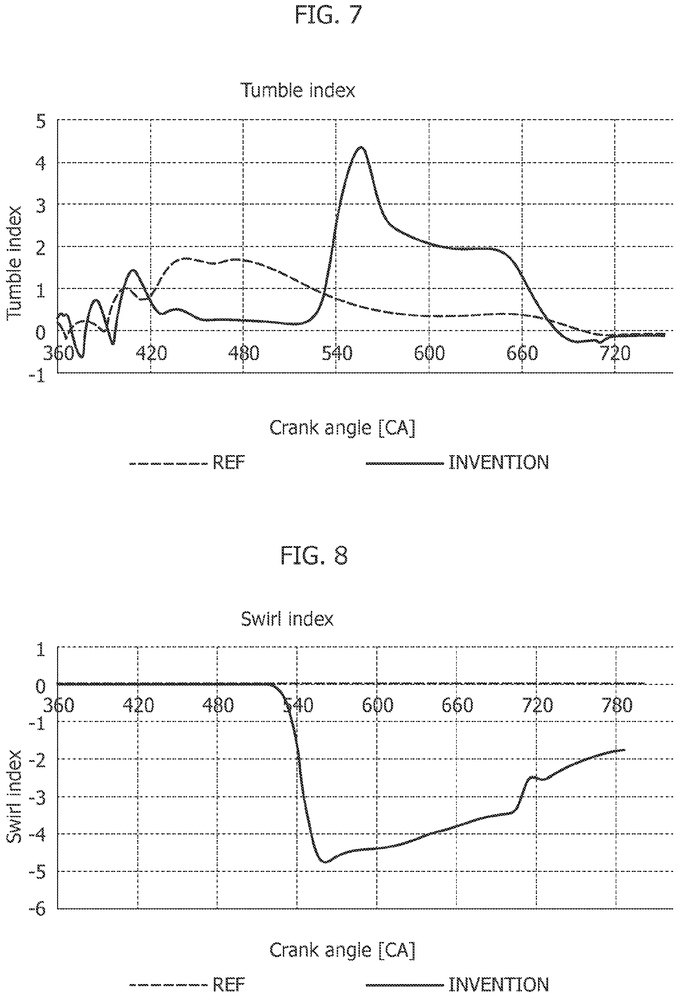

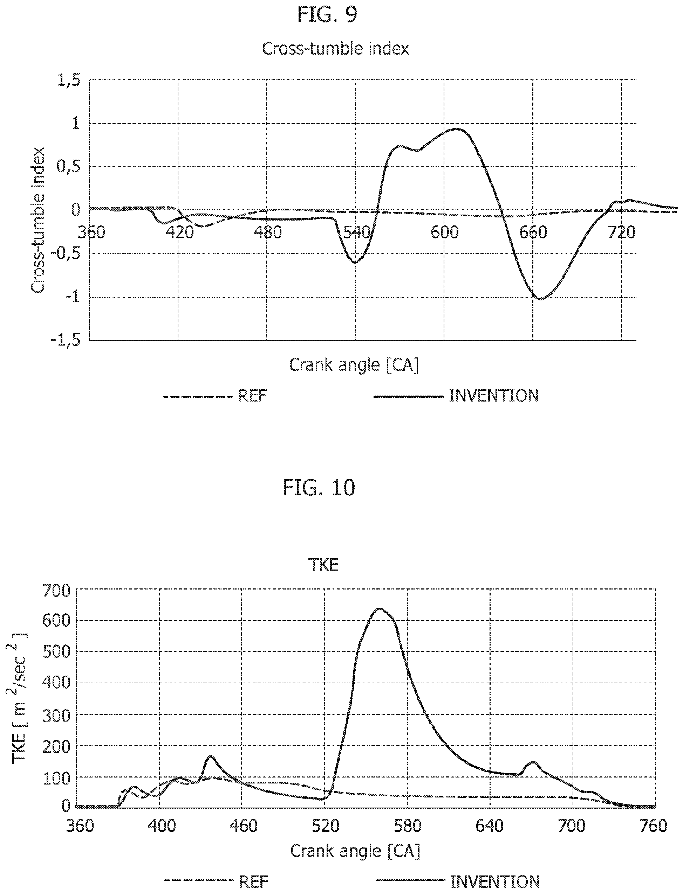

The strategy for opening the intake valves, implemented according to this invention, is aimed at obtaining a series of specific effects. During the first opening period, when both the intake valves VA and VB are opened, the air flows introduced through the intake ducts 3A, 3B have swirl components having mutually opposite directions, so that the overall swirl motion resulting in the cylinder following of the first opening period is substantially zero or almost zero (see figure 8 in the range between 360° and 450° of the crank angle). Both intake ducts are instead capable of generating a moderate tumble and cross-tumble component (see figures 7, 9, in the range between 360° and 450° of the crank angle). Conversely, in the second opening period, when only the intake valve VA is opened, the air flow introduced through a single intake duct takes a swirl component in the cylinder (see figure 8, in the range following 540° of the crank angle). In the diagrams of figures 7, 8 and 9 the changes of the tumble, swirl and cross-tumble index are shown in comparison with a conventional solution (dashed line) in which both intake valves together follow a conventional lift profile, corresponding to the profile of their drive cam.

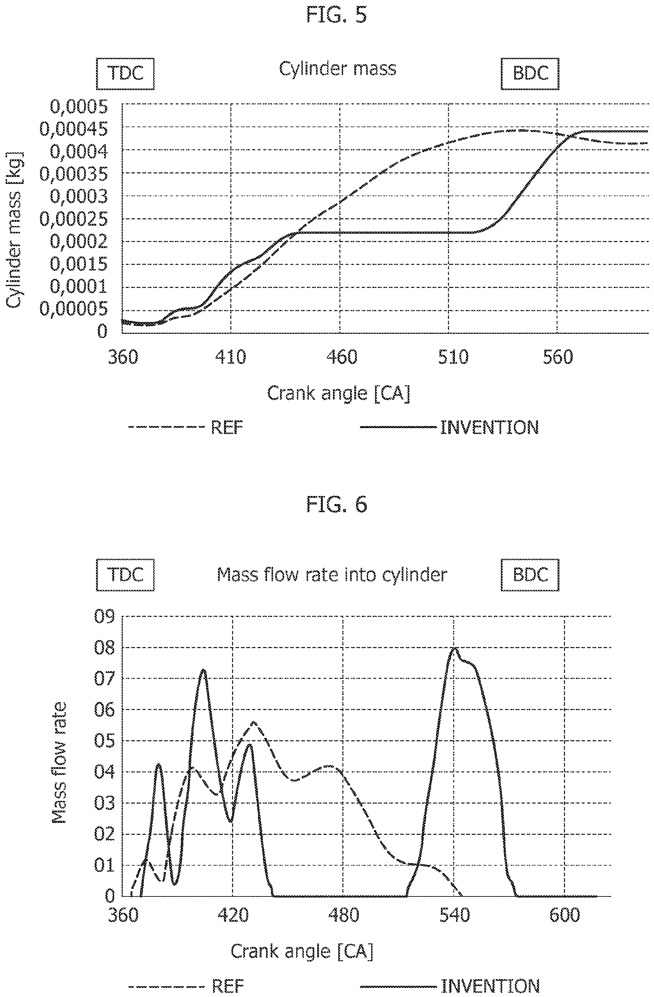

Figure 5 shows the change of the mass of air introduced into the cylinder as a function of the crank angle, in the case of the valve opening strategy according to figure 4, i.e. according to the teachings of this invention, in comparison with the change of the air charge in a conventional solution (shown with dashed line). The same comparison is indicated in figure 6, but with reference to the introduced airflow rate (in Kg/s).

Figure 10 is a diagram showing the change of turbulent kinetic energy in the engine according to the invention (solid line) and a conventional solution (dashed line). The effect of the strategy for opening the inlet valves shown in figure 4 is positive: at a crank angle of 720°, i.e. when the piston is at TDC and the spark plug is fired, the TKE is about double that of the conventional engine.

In order to obtain the advantages pursued by this invention, it is necessary to combine the strategy for opening the intake valves which has been described above with a specific fuel injection strategy.

In the engine according to the invention, the fuel supply system is configured to perform at least one fuel injection, during said first opening period, as represented by the dotted line I illustrated in the upper part of figure 4 which shows the injector needle lift as a function of crank angle.

Therefore, in the engine according to the invention the fuel injection is performed when both the intake valves are open and the swirl vortex is substantially zero, so that a completely homogeneous field of the air/fuel mixture is generated in the combustion chamber.

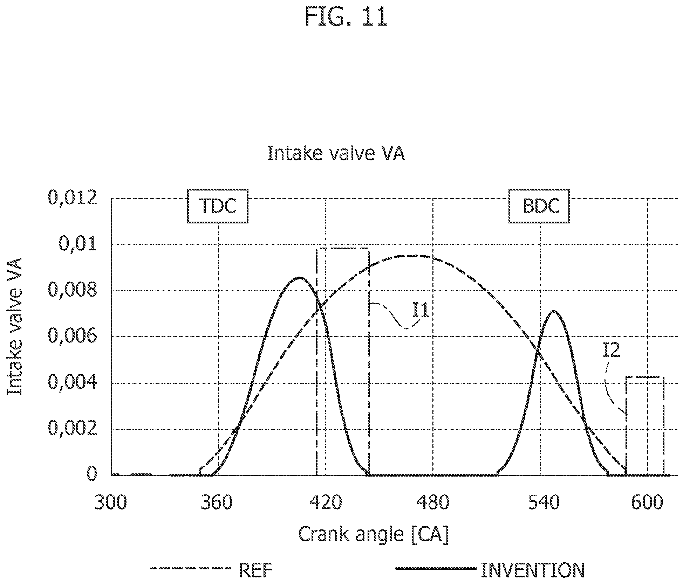

In the variant shown in figure 11, after the first fuel injection I1 a second fuel injection I2 is performed following the start of the second opening period.

Thanks to the higher TKE that is present in the combustion chamber at ignition, the combustion propagation is considerably faster.

As already indicated, the lift profiles of the intake valves required for this invention (see figure 4) need the use of a variable actuation device which is capable of performing the two sequential opening and closing cycles of the first intake valve in a range of 200°-240° of the crank angle and is capable of achieving each lift profile of each intake valve with a very steep up and down ramp (i.e. with an almost rectangular profile).

The variable actuation system of the engine valves allows to change the opening stage of the first intake valve during said second opening period, depending on engine load and engine speed. In this way it is possible to adjust very efficiently the swirl level established in the second opening period in each operating condition of the engine. The result is that the engine according to the invention is capable of drastically reducing losses due to cooling resulting from the contact of the mixture in the combustion chamber with the cylinder walls.

The swirl vortex that is created during said second opening period allows the hot spots of the combustion chamber to be cooled, which makes it possible to obtain an anti-knocking effect even in the presence of a high compression ratio.

A further advantage derives from the use of a central injector with an injector needle having an outwardly opening movement, with a cone-shaped head which produces a radial jet substantially according several radial directions almost perpendicular to the cylinder axis, which prevents cooling due to contact with the piston head.

Of course, the principle of the invention remaining the same, the construction details and embodiments may change widely with respect to what is described and illustrated purely by way of example, without thereby departing from the scope of this invention, as defined in the appended claims.

## Claims

1. Spark-ignition internal combustion engine, comprising one or more cylinders (1) and respective pistons sliding within the cylinders between a TDC and a BDC and operatively connected to a crankshaft, said engine being configured to carry out successive intake, compression, expansion and exhaust stages during each operating cycle in each cylinder,
wherein the engine includes, for each cylinder:
- a first intake duct (3A) and a second intake duct (3B) leading into the cylinder and configured to receive air at the same pressure,
- a first intake valve (VA) and a second intake valve (VB) associated with the cylinder (1), for controlling the entry into the cylinder of a flow of intake air from the first intake duct (3A) and from the second intake duct (3B), respectively, during each cylinder operating cycle,
- an actuation device (6) for actuating said first intake valve (VA) and said second intake valve (VB),
- a fuel supply system comprising at least one injector associated with each cylinder, and configured and arranged to feed fuel, directly or indirectly, into a combustion chamber defined in the respective cylinder, during each operating cycle of the cylinder, and
- a spark plug associated with each cylinder,
wherein:
- said device for actuating said first intake valve (VA) and said second intake valve (VB) is configured to provide, in each operating cycle of the cylinder, at least under certain operating conditions of the engine:
- a first opening period, in which both intake valves (VA, VB) are opened and a second opening period, in which only a first intake valve (VA), of said two intake valves, is opened, while the second intake valve (VB) remains closed,
said engine being **characterized in that** said device for actuating said first intake valve (VA) and said second intake valve (VB) is configured in such a way that:
- in said first opening period the two intake valves (VA, VB) open when the piston of the respective cylinder is close to TDC and close when the piston is at an intermediate point in the descent from TDC to BDC,
- in said second opening period said first intake valve (VA) opens when the piston of the respective cylinder is in proximity the BDC, and closes when the piston is ascending from BDC to the TDC,
- said fuel supply system being configured to perform at least one fuel injection, via said injector, in each operating cycle of each cylinder, during said first opening period of the intake valves (VA, VB), when both intake valves are open.

2. Engine according to claim 1, **characterized in that** said fuel supply system is configured to perform a further fuel injection after the start of said second opening period.

3. Engine according to claim 1, wherein the actuation device of the intake valves is an electronically controlled hydraulic actuation device (8) or a device with electromagnetic or electropneumatic actuators and is configured to vary, in said second period opening angle, the crank angle at which the first intake valve opens and/or the crank angle at which the first intake valve closes and/or the lift of the intake valve, depending upon engine load and engine speed.

4. Engine according to claim 1, **characterized in that** the injector (I) associated with each cylinder is arranged in the combustion chamber associated with the cylinder.

5. Engine according to claim 1, **characterized in that** the injector (I) associated with each cylinder is arranged in the intake duct (3A) to which said first intake valve (VA) is associated.

6. Engine according to claim 1, **characterized in that** the injector (I) is of the type with an injector needle (N) having a cone-shaped terminal head (N1) cooperating with a nozzle outlet (11) of the injector (I) and having an outward opening movement, in which the cone-shaped head (N1) moves away from the injector outlet (11) to feed fuel into the cylinder.

7. Method for controlling a spark-ignition internal combustion engine, comprising one or more cylinders (1) and respective pistons sliding within the cylinders between a TDC and a BDC and operatively connected to a crankshaft, said engine being configured to actuate successive intake, compression, expansion and exhaust stages during each operating cycle in each cylinder,
wherein the engine includes, for each cylinder:
- a first intake duct (3A) and a second intake duct (3B) leading into the cylinder and configured to receive air at the same pressure,
- a first intake valve (VA) and a second intake valve (VB) associated with the cylinder (1), for controlling the entry into the cylinder of a flow of intake air from the first intake duct (3A) and from the second intake duct (3B), respectively, during each cylinder operating cycle,
- an actuation device (6) for actuating said first intake valve (VA) and said second intake valve (VB),
- a fuel supply system comprising at least one injector associated with each cylinder, and configured and arranged to feed fuel into a combustion chamber defined in the respective cylinder, during each operating cycle of the cylinder, and
- a spark plug associated with each cylinder,
said method including:
- providing, by means of said actuation device for actuating said first intake valve (VA) and said second intake valve (VB), in each operating cycle of the cylinder, at least under certain operating conditions of the engine, a first opening period, in which both intake valves (VA, VB) are opened and a second opening period, in which only a first intake valve (VA), of said two intake valves, is opened, while the second intake valve (VB) remains closed, said method being **characterized in that**:
- in said first opening period the two intake valves (VA, VB) open when the piston of the respective cylinder is close to TDC and close when the piston is at an intermediate point in the descent from TDC to BDC,
- in said second opening period said first intake valve (VA) opens when the piston of the respective cylinder is in proximity of the BDC, and closes when the piston is ascending from BDC to the TDC,
said method further comprising:
- performing a fuel injection in each operating cycle of each cylinder, during said first opening period of the intake valves (VA, VB), when both intake valves are open.

8. Method according to claim 7, **characterized in that** it comprises performing a further fuel injection after the start of said second opening period.

## Patentansprüche

1. Verbrennungsmotor mit Fremdzündung, umfassend einen oder mehrere Zylinder (1) und jeweilige Kolben, die innerhalb der Zylinder zwischen einem OT und einem UT gleiten und betriebsmäßig mit einer Kurbelwelle verbunden sind, wobei besagter Motor konfiguriert ist, um in jedem Zylinder während jedes Arbeitszyklus aufeinanderfolgende Ansaug- , Verdichtungs-, Expansions- und Auslassphasen durchzuführen,
wobei der Motor für jeden Zylinder umfasst:
- einen ersten Ansaugkanal (3A) und einen zweiten Ansaugkanal (3B), die in den Zylinder führen und konfiguriert sind, um Luft mit demselben Druck aufzunehmen,
- ein erstes Einlassventil (VA) und ein zweites Einlassventil (VB), die dem Zylinder (1) zugeordnet sind, um den Eintritt eines Ansaugluftstroms aus dem ersten Ansaugkanal (3A) bzw. aus dem zweiten Ansaugkanal (3B) in den Zylinder während jedes Zylinderarbeitszyklus zu steuern,
- eine Betätigungseinrichtung (6) zum Betätigen besagten ersten Einlassventils (VA) und besagten zweiten Einlassventils (VB),
- ein Kraftstoffversorgungssystem, das mindestens einen Einspritzer umfasst, der jedem Zylinder zugeordnet ist, und konfiguriert und angeordnet ist, um Kraftstoff während jedes Arbeitszyklus des Zylinders direkt oder indirekt in eine in dem jeweiligen Zylinder definierte Brennkammer einzubringen, und
- eine Zündkerze, die jedem Zylinder zugeordnet ist,
wobei:
- besagte Einrichtung zum Betätigen besagten ersten Einlassventils (VA) und besagten zweiten Einlassventils (VB) konfiguriert ist, um in jedem Arbeitszyklus des Zylinders, zumindest unter bestimmten Betriebsbedingungen des Motors, bereitzustellen:
- eine erste Öffnungsperiode, in der beide Einlassventile (VA, VB) geöffnet sind, und eine zweite Öffnungsperiode, in der nur ein erstes Einlassventil (VA) der besagten zwei Einlassventile geöffnet ist, während das zweite Einlassventil (VB) geschlossen bleibt,
wobei besagter Motor **dadurch gekennzeichnet ist, dass** besagte Einrichtung zum Betätigen besagten ersten Einlassventils (VA) und besagten zweiten Einlassventils (VB) so konfiguriert ist, dass:
- in besagter ersten Öffnungsperiode die beiden Einlassventile (VA, VB) öffnen, wenn sich der Kolben des jeweiligen Zylinders in der Nähe des OT befindet, und schließen, wenn sich der Kolben an einem Zwischenpunkt im Abstieg vom OT zum UT befindet,
- in besagter zweiten Öffnungsperiode besagtes erstes Einlassventil (VA) öffnet, wenn sich der Kolben des jeweiligen Zylinders in der Nähe des UT befindet, und schließt, wenn der Kolben vom UT zum OT aufsteigt,
- besagtes Kraftstoffversorgungssystem konfiguriert ist, um mindestens eine Kraftstoffeinspritzung über besagten Einspritzer in jedem Arbeitszyklus jedes Zylinders während besagter ersten Öffnungsperiode der Einlassventile (VA, VB) durchzuführen, wenn beide Einlassventile geöffnet sind.

2. Motor nach Anspruch 1, **dadurch gekennzeichnet, dass** besagtes Kraftstoffversorgungssystem konfiguriert ist, um eine weitere Kraftstoffeinspritzung nach Beginn besagter zweiten Öffnungsperiode durchzuführen.

3. Motor nach Anspruch 1, wobei die Betätigungseinrichtung der Einlassventile eine elektronisch gesteuerte hydraulische Betätigungseinrichtung (8) oder eine Einrichtung mit elektromagnetischen oder elektropneumatischen Stellgliedern ist und konfiguriert ist, um in besagter zweiten Öffnungsperiode den Kurbelwinkel, bei dem das erste Einlassventil öffnet, und/oder den Kurbelwinkel, bei dem das erste Einlassventil schließt, und/oder den Hub des Einlassventils in Abhängigkeit von der Motorlast und der Motordrehzahl zu variieren.

4. Motor nach Anspruch 1, **dadurch gekennzeichnet, dass** der jedem Zylinder zugeordnete Einspritzer (I) in der dem Zylinder zugeordneten Brennkammer angeordnet ist.

5. Motor nach Anspruch 1, **dadurch gekennzeichnet, dass** der jedem Zylinder zugeordnete Einspritzer (I) in dem Ansaugkanal (3A) angeordnet ist, dem besagtes erstes Einlassventil (VA) zugeordnet ist.

6. Motor nach Anspruch 1, **dadurch gekennzeichnet, dass** der Einspritzer (I) vom Typ mit einer Einspritzernadel (N) ist, die einen kegelförmigen Endkopf (N1) aufweist, der mit einer Düsenaustrittsöffnung (11) des Einspritzers (I) zusammenwirkt und eine nach außen gerichtete Öffnungsbewegung aufweist, bei der sich der kegelförmige Kopf (N1) von der Einspritzerauslassöffnung (I1) wegbewegt, um Kraftstoff in den Zylinder einzubringen.

7. Verfahren zur Steuerung eines Verbrennungsmotors mit Fremdzündung, umfassend einen oder mehrere Zylinder (1) und jeweilige Kolben, die innerhalb der Zylinder zwischen einem OT und einem UT gleiten und betriebsmäßig mit einer Kurbelwelle verbunden sind, wobei besagter Motor konfiguriert ist, um in jedem Zylinder während jedes Arbeitszyklus aufeinanderfolgende Ansaug-, Verdichtungs-, Expansions- und Auslassphasen durchzuführen,
wobei der Motor für jeden Zylinder umfasst:
- einen ersten Ansaugkanal (3A) und einen zweiten Ansaugkanal (3B), die in den Zylinder führen und konfiguriert sind, um Luft mit demselben Druck aufzunehmen,
- ein erstes Einlassventil (VA) und ein zweites Einlassventil (VB), die dem Zylinder (1) zugeordnet sind, um den Eintritt eines Ansaugluftstroms aus dem ersten Ansaugkanal (3A) bzw. aus dem zweiten Ansaugkanal (3B) in den Zylinder während jedes Zylinderarbeitszyklus zu steuern,
- eine Betätigungseinrichtung (6) zum Betätigen besagten ersten Einlassventils (VA) und besagten zweiten Einlassventils (VB),
- ein Kraftstoffversorgungssystem, das mindestens einen Einspritzer umfasst, der jedem Zylinder zugeordnet ist, und konfiguriert und angeordnet ist, um Kraftstoff während jedes Arbeitszyklus des Zylinders in eine in dem jeweiligen Zylinder definierte Brennkammer einzubringen, und
- eine Zündkerze, die jedem Zylinder zugeordnet ist,
wobei besagtes Verfahren umfasst:
- Bereitstellen, mittels besagter Betätigungseinrichtung zum Betätigen besagten ersten Einlassventils (VA) und besagten zweiten Einlassventils (VB), in jedem Arbeitszyklus des Zylinders, zumindest unter bestimmten Betriebsbedingungen des Motors, einer ersten Öffnungsperiode, in der beide Einlassventile (VA, VB) geöffnet sind, und einer zweiten Öffnungsperiode, in der nur ein erstes Einlassventil (VA) der besagten zwei Einlassventile geöffnet ist, während das zweite Einlassventil (VB) geschlossen bleibt,
wobei besagtes Verfahren **dadurch gekennzeichnet ist, dass**:
- in besagter ersten Öffnungsperiode die beiden Einlassventile (VA, VB) öffnen, wenn sich der Kolben des jeweiligen Zylinders in der Nähe des OT befindet, und schließen, wenn sich der Kolben an einem Zwischenpunkt im Abstieg vom OT zum UT befindet,
- in besagter zweiten Öffnungsperiode besagtes erstes Einlassventil (VA) öffnet, wenn sich der Kolben des jeweiligen Zylinders in der Nähe des UT befindet, und schließt, wenn der Kolben vom UT zum OT aufsteigt,
wobei besagtes Verfahren ferner umfasst:
- Durchführen einer Kraftstoffeinspritzung in jedem Arbeitszyklus jedes Zylinders während besagter ersten Öffnungsperiode der Einlassventile (VA, VB), wenn beide Einlassventile geöffnet sind.

8. Verfahren nach Anspruch 7, **dadurch gekennzeichnet, dass** es das Durchführen einer weiteren Kraftstoffeinspritzung nach Beginn besagter zweiten Öffnungsperiode umfasst.

## Revendications

1. Moteur à combustion interne à allumage commandé, comprenant un ou plusieurs cylindres (1) et des pistons respectifs coulissant à l'intérieur des cylindres entre un PMH et un PMB et connectés fonctionnellement à un vilebrequin, ledit moteur étant configuré pour réaliser des phases successives d'admission, de compression, de détente et d'échappement pendant chaque cycle de fonctionnement dans chaque cylindre,
dans lequel le moteur comprend, pour chaque cylindre :
- un premier conduit d'admission (3A) et un second conduit d'admission (3B) débouchant dans le cylindre et configurés pour recevoir de l'air à la même pression,
- une première soupape d'admission (VA) et une seconde soupape d'admission (VB) associées au cylindre (1), pour commander l'entrée dans le cylindre d'un flux d'air d'admission provenant du premier conduit d'admission (3A) et du second conduit d'admission (3B), respectivement, pendant chaque cycle de fonctionnement du cylindre,
- un dispositif d'actionnement (6) pour actionner ladite première soupape d'admission (VA) et ladite seconde soupape d'admission (VB),
- un système d'alimentation en carburant comprenant au moins un injecteur associé à chaque cylindre, et configuré et agencé pour alimenter en carburant, directement ou indirectement, dans une chambre de combustion définie dans le cylindre respectif, pendant chaque cycle de fonctionnement du cylindre, et
- une bougie d'allumage associée à chaque cylindre,
dans lequel :
- ledit dispositif pour actionner ladite première soupape d'admission (VA) et ladite seconde soupape d'admission (VB) est configuré pour fournir, dans chaque cycle de fonctionnement du cylindre, au moins sous certaines conditions de fonctionnement du moteur :
- une première période d'ouverture, dans laquelle les deux soupapes d'admission (VA, VB) sont ouvertes et une seconde période d'ouverture, dans laquelle seule une première soupape d'admission (VA), desdites deux soupapes d'admission, est ouverte, tandis que la seconde soupape d'admission (VB) reste fermée,
ledit moteur étant **caractérisé en ce que** ledit dispositif pour actionner ladite première soupape d'admission (VA) et ladite seconde soupape d'admission (VB) est configuré de telle sorte que :
- dans ladite première période d'ouverture les deux soupapes d'admission (VA, VB) s'ouvrent lorsque le piston du cylindre respectif est proche du PMH et se ferment lorsque le piston est à un point intermédiaire dans la descente du PMH au PMB,
- dans ladite seconde période d'ouverture ladite première soupape d'admission (VA) s'ouvre lorsque le piston du cylindre respectif est à proximité du PMB, et se ferme lorsque le piston monte du PMB au PMH,
- ledit système d'alimentation en carburant étant configuré pour effectuer au moins une injection de carburant, via ledit injecteur, dans chaque cycle de fonctionnement de chaque cylindre, pendant ladite première période d'ouverture des soupapes d'admission (VA, VB), lorsque les deux soupapes d'admission sont ouvertes.

2. Moteur selon la revendication 1, **caractérisé en ce que** ledit système d'alimentation en carburant est configuré pour effectuer une injection de carburant supplémentaire après le début de ladite seconde période d'ouverture.

3. Moteur selon la revendication 1, dans lequel le dispositif d'actionnement des soupapes d'admission est un dispositif d'actionnement hydraulique à commande électronique (8) ou un dispositif avec des actionneurs électromagnétiques ou électropneumatiques et est configuré pour faire varier, dans ladite seconde période d'ouverture, l'angle de manivelle auquel la première soupape d'admission s'ouvre et/ou l'angle de manivelle auquel la première soupape d'admission se ferme et/ou la levée de la soupape d'admission, en fonction de la charge du moteur et de la vitesse du moteur.

4. Moteur selon la revendication 1, **caractérisé en ce que** l'injecteur (I) associé à chaque cylindre est disposé dans la chambre de combustion associée au cylindre.

5. Moteur selon la revendication 1, **caractérisé en ce que** l'injecteur (I) associé à chaque cylindre est disposé dans le conduit d'admission (3A) auquel est associée ladite première soupape d'admission (VA).

6. Moteur selon la revendication 1, **caractérisé en ce que** l'injecteur (I) est du type avec une aiguille d'injecteur (N) ayant une tête terminale conique (N1) coopérant avec un orifice de sortie de buse (11) de l'injecteur (I) et ayant un mouvement d'ouverture vers l'extérieur, dans lequel la tête conique (N1) s'éloigne de l'orifice de sortie de l'injecteur (11) pour alimenter en carburant le cylindre.

7. Procédé pour commander un moteur à combustion interne à allumage commandé, comprenant un ou plusieurs cylindres (1) et des pistons respectifs coulissant à l'intérieur des cylindres entre un PMH et un PMB et connectés fonctionnellement à un vilebrequin, ledit moteur étant configuré pour actionner des phases successives d'admission, de compression, de détente et d'échappement pendant chaque cycle de fonctionnement dans chaque cylindre,
dans lequel le moteur comprend, pour chaque cylindre :
- un premier conduit d'admission (3A) et un second conduit d'admission (3B) débouchant dans le cylindre et configurés pour recevoir de l'air à la même pression,
- une première soupape d'admission (VA) et une seconde soupape d'admission (VB) associées au cylindre (1), pour commander l'entrée dans le cylindre d'un flux d'air d'admission provenant du premier conduit d'admission (3A) et du second conduit d'admission (3B), respectivement, pendant chaque cycle de fonctionnement du cylindre,
- un dispositif d'actionnement (6) pour actionner ladite première soupape d'admission (VA) et ladite seconde soupape d'admission (VB),
- un système d'alimentation en carburant comprenant au moins un injecteur associé à chaque cylindre, et configuré et agencé pour alimenter en carburant dans une chambre de combustion définie dans le cylindre respectif, pendant chaque cycle de fonctionnement du cylindre, et
- une bougie d'allumage associée à chaque cylindre,
ledit procédé incluant :
- fournir, au moyen dudit dispositif d'actionnement pour actionner ladite première soupape d'admission (VA) et ladite seconde soupape d'admission (VB), dans chaque cycle de fonctionnement du cylindre, au moins sous certaines conditions de fonctionnement du moteur, une première période d'ouverture, dans laquelle les deux soupapes d'admission (VA, VB) sont ouvertes et une seconde période d'ouverture, dans laquelle seule une première soupape d'admission (VA), desdites deux soupapes d'admission, est ouverte, tandis que la seconde soupape d'admission (VB) reste fermée,
ledit procédé étant **caractérisé en ce que** :
- dans ladite première période d'ouverture les deux soupapes d'admission (VA, VB) s'ouvrent lorsque le piston du cylindre respectif est proche du PMH et se ferment lorsque le piston est à un point intermédiaire dans la descente du PMH au PMB,
- dans ladite seconde période d'ouverture ladite première soupape d'admission (VA) s'ouvre lorsque le piston du cylindre respectif est à proximité du PMB, et se ferme lorsque le piston monte du PMB au PMH,
ledit procédé comprenant en outre :
- effectuer une injection de carburant dans chaque cycle de fonctionnement de chaque cylindre, pendant ladite première période d'ouverture des soupapes d'admission (VA, VB), lorsque les deux soupapes d'admission sont ouvertes.

8. Procédé selon la revendication 7, **caractérisé en ce qu'**il comprend l'exécution d'une injection de carburant supplémentaire après le début de ladite seconde période d'ouverture.
